# EUROPÄISCHE PATENTANMELDUNG

(11) **EP 2 441 609 A2**
(43) Veröffentlichungstag der Anmeldung: **18.04.2012**
(21) Anmeldenummer: 11185140.8
(22) Anmeldetag: 14.10.2011
(51) Int. Cl.: B60J 7/10

(54) **Planartiges Flächenelement zum Abdecken von Ladebereichen von insbesondere Lastkraftwagen**

(30) Priorität: 14.10.2010 DE 202010014247 U; 10.05.2011 DE 102011101025
(71) Anmelder: Euro Infrarot Technologie GmbH & Co. KG, 49456 Bakum (DE)
(72) Erfinder: Wigbers, Heinrich, 49456 Bakum (DE)
(74) Vertreter: Jabbusch, Matthias

(57) **Zusammenfassung**

Bei einem planenartigen Flächenelement (3) zum Abdecken von Ladebereichen von insbesondere Lastkraftwagen, ist vorgesehen, dass zumindest Abschnitten seiner flächigen Erstreckung elektrische Heizelemente (7) zugeordnet sind.

## Beschreibung

Die Erfindung betrifft ein planenartiges Flächenelement zum Abdecken von Ladebereichen von insbesondere Lastkraftwagen.

Lastkraftwagen weisen regelmäßig planenartige Flächenelemente als Abdeckungen auf. Sie bedecken Pritschen, werden durch Spriegel gehalten.

Bei feuchten Witterungen können sich auf planenartigen Flächenelementen der Lastkraftwagen Flüssigkeitsrückstände bilden, welche im Winter Eis ausbilden. Dieses Eis kann bei einer Fahrt des Lastkraftwagens herunterfallen. Die Problematik ist seit Jahren bekannt und es wurden eine Reihe Vorrichtungen vorgeschlagen, um eine Lösung für dieses Problem zu finden.

So wurde bereits daran gedacht, die oberste Plane doppellagig auszubilden und durch Einführen von insbesondere Auspuffgasen den Abstand beider Lagen zueinander zu vergrößern, um eine Wulst auszubilden, welche das Eis definiert herunterfallen lässt.

Diese Maßnahme zielt darauf ab, bereits entstandenes Eis von dem Flächenelement definiert herunterzuholen.

Aufgabe der Erfindung ist es, ein planenartiges Flächenelement der eingangs genannten Gattung aufzuzeigen, mit dem bereits das Entstehen von Eis auf Flächenelementen verhinderbar ist.

Diese Aufgabe ist erfindungsgemäß dadurch gelöst, dass zumindest Abschnitten seiner flächigen Erstreckung elektrische Heizelemente zugeordnet sind.

Die elektrischen Heizelemente können bereits eingeschaltet werden, bevor Eis auf dem Flächenelement entsteht. Lastkraftwagen werden regelmäßig über Nacht abgestellt, um ein Nachtfahrverbot zu beachten. In diesem abgestellten Zustand kann ein Einschalten der elektrischen Heizelemente erfolgen, um die Oberfläche auf dem Flächenelement beispielsweise bei etwa +5°C zu halten. Eine Eisbildung ist dann sicher verhindert.

Der Betrieb der elektrischen Heizelemente kann mit 230 V Spannung erfolgen oder auch mit Hilfe des Bordnetzes von Lastkraftwagen mit einer Spannung von z. B. 24 Volt. Diese 24 Volt können gegebenenfalls hochtransformiert werden, um eine größere Spannung zur Verfügung zu stellen. Für jeden Quadratmeter des Flächenelementes kann eine Heizleistung von 50 bis 300 W/qm² vorgesehen sein. Diese Heizleistung reicht aus, auffallenden auch stärkeren Schneefall zu schmelzen, um ein Verdichten der Schneeflocken zu einer Eisschicht sicher auszuschließen.

Die erzielte Heizleistung verhindert eine Eisbildung bis zu einer Außentemperatur von etwa -25°C.

Konstruktiv kann vorgesehen sein, dass in das Material des Flächenelementes eine Heizdrähte umfassende Flächenlage eingearbeitet ist. Alternativ ist es möglich, dass das Flächenelement zumindest teilweise aus einem Faserverbundmaterial gefertigt ist, wobei an dieses Material eine elektrische Spannung anlegbar ist. Faserverbundmaterial kann elektrisch leitend sein, so dass die Energie für die Heizelemente direkt über das Material des Flächenelementes geführt wird. Das Faserverbundmaterial kann dabei beispielsweise ein Carbonmaterial sein.

Möglich ist schließlich auch eine mehrlagige Ausbildung des Flächenelementes, wobei zumindest in einer Lage Heizdrähte aufgenommen sind.

Die Größe des Flächenelementes kann etwa 300 cm x 750 cm betragen, es ist also rechteckig ausbildbar. Ein größerer LKW kann mit mehreren Flächenelementen abgedeckt werden. Die Flächenelemente werden über das durch das Flächenelement ausgebildete Dach des LKW's bzw. des LKW - Aufliegers aufgezogen. Das Aufziehen kann durch den LKW-Fahrer selbst erfolgen, indem er die Flächenelemente in gepackter Form mitführt und selbstständig über den LKW zieht. Dazu können an den Flächenelementen Wurfelemente vorhanden sein, mit denen eine Schnur über den LKW auf die andere Seite geworfen wird und dann wird anhand dieser Schnur das Flächenelement über den LKW gezogen.

So können vier Flächenelemente zu je ein Viertel die Abdeckung eines LKW-Daches übernehmen. Am LKW können sie seitlich durch Gummistränge gehalten werden. Auf der gegenüberliegenden Seite kann ein weiterer Gummistrang zur Befestigung vorgesehen sein.

Sollte sich auf dem LKW-Dach noch ein Schneerest befinden, wird dieser beim z. B. am nächsten Tag stattfindenden Herunternehmen der Flächenelemente mit abgeräumt. Die gesamte Prozedur des Aufziehens der Flächenelemente sowie des Abnehmens der Flächenelemente ist durch eine Person in jeweils 5 Minuten durchführbar. Die Flächenelemente können nach ihrem Einsatz aufgerollt werden und im Lastkraftwagen mitgeführt werden.

Derartige Flächenelemente sind auch für andere Zwecke einsetzbar, beispielsweise für Wintergärten oder Gewächshäuser.

Neben diesem Herunterziehen kann auch vorgesehen sein, dass das Flächenelement auf- und abrollbar ist. Auf diese Weise ist es in eine ortsfest auf dem Lastkraftwagen angeordnete Plane integrierbar.

Ein Ausführungsbeispiel der Erfindung, aus dem sich weitere erfinderische Merkmale ergeben, ist in der Zeichnung dargestellt. Es zeigen:
- Fig. 1:: eine perspektivische Ansicht eines Lastkraftwagens mit einem erfindungsgemäßen Flächenelement und
- Fig. 2:: eine maßstäblich vergrößerte Teilansicht des Flächenelementes gemäß Fig. 1

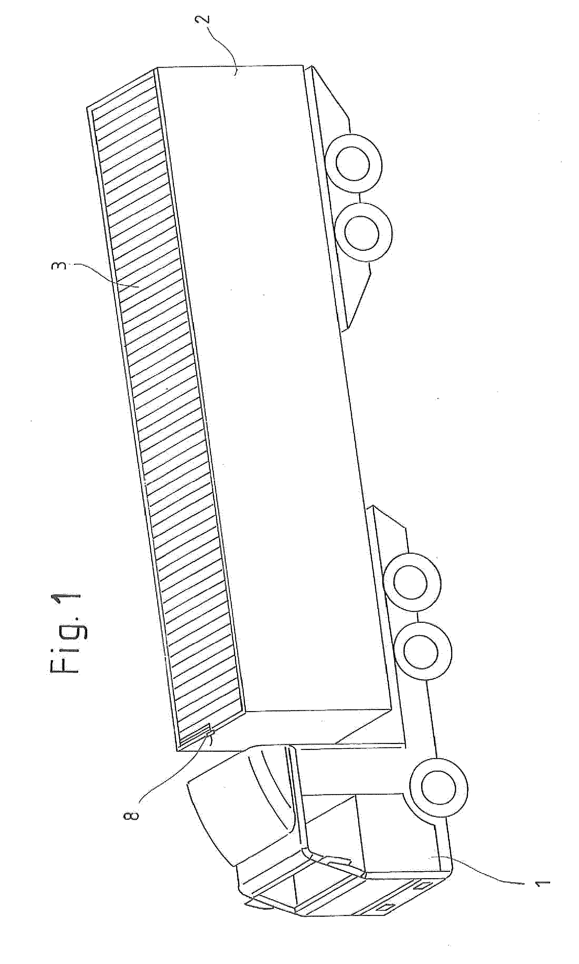

Der Lastkraftwagen in Fig. 1 weist ein Führerhaus 1 sowie einen Sattelauflieger 2 auf. Die Seitenwände und das Dach des Sattelaufliegers 2 sind durch planenartige Flächenelemente ausgebildet. Das obere Flächenelement 3 ist zwischen winkelartige Ausgestaltungen der Seitenwände 2 eingeschoben. Alternativ kann vorgesehen, dass das obere Flächenelement 3 auf- und abrollbar ist.

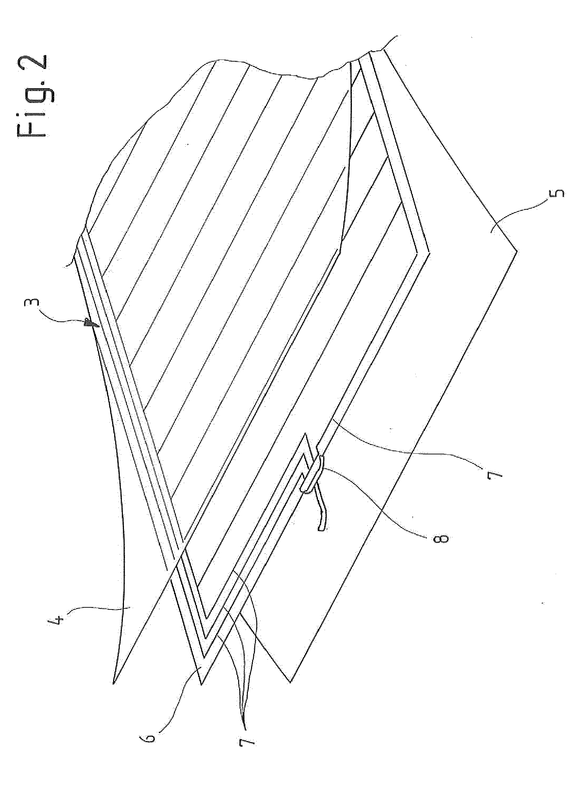

Fig. 2 zeigt das Flächenelement 3 als dreilagig ausgebildet. Neben einer Oberplane 4 und einer Unterplane 5 ist eine Lage 6 vorgesehen, in welche Heizdrähte 7 eingesetzt sind. Die Heizdrähte 7 verlaufen über die gesamte Erstreckung des Flächenelementes 3. Am dem Führerhaus 1 zugeordneten stirnseitigen Ende des Flächenelementes 3 ist ein Anschlusskasten 8 für die Heizdrähte 7 vorgesehen. Im Anschlusskasten 8 kann ein Frostwächter angeordnet sein.

Die Heizdrähte 7 können beispielsweise drei Heizkreise bzw. Heizzonen über die Erstreckung des Sattelaufliegers 2 ausbilden. Dadurch gelingt eine gleichmäßige Wärmeflächenverteilung.

## Patentansprüche

1. Planenartiges Flächenelement zum Abdecken von Ladebereichen von insbesondere Lastkraftwagen,
**dadurch gekennzeichnet,**
**dass** zumindest Abschnitten seiner flächigen Erstreckung elektrische Heizelemente zugeordnet sind.

2. Flächenelement nach Anspruch 1, **dadurch gekennzeichnet, dass** in sein Material eine Heizdrähte (7) umfassende Flächenlage eingearbeitet ist.

3. Flächenelement nach Anspruch 1, **dadurch gekennzeichnet, dass** es zumindest teilweise aus einem Faserverbundmaterial gefertigt ist, wobei an dieses Material eine elektrische Spannung einlegbar ist.

4. Flächenelement nach Anspruch 3, **dadurch gekennzeichnet, dass** das Faserverbundmaterial ein Carbonmaterial ist.

5. Flächenelement nach Anspruch 1, **dadurch gekennzeichnet, dass** es mehrlagig ausgebildet ist, wobei zumindest in einer Lage Heizdrähte (7) aufgenommen sind.

6. Flächenelement nach einem der vorhergehenden Ansprüche, **dadurch gekennzeichnet, dass** es auf- und abrollbar ist.

7. Flächenelement nach einem der vorhergehenden Ansprüche, **dadurch gekennzeichnet, dass** seine Größe zwischen 300 cm bis 750 cm Länge und zwischen 250 cm bis 300 cm Breite beträgt, und es mit drei Gurthalterungen befestigbar ist.
